(19) Europäisches Patentamt
European Patent Office
Office européen des brevets

(11) **EP 4 800 789 A1**

(12) **EUROPEAN PATENT APPLICATION**
published in accordance with Art. 153(4) EPC


(43) Date of publication:
**02.09.2026 Bulletin 2026/36**

(21) Application number: **24882117.5**

(22) Date of filing: **02.10.2024**

(51) International Patent Classification (IPC):
***H01M 10/052*** (2010.01) ***H01M 4/36*** (2006.01)
***H01M 4/38*** (2006.01) ***H01M 4/48*** (2010.01)
***H01M 4/133*** (2010.01) ***H01M 4/587*** (2010.01)
***H01M 10/0567*** (2010.01) ***H01M 10/0569*** (2010.01)

(52) Cooperative Patent Classification (CPC):
**H01M 4/133; H01M 4/36; H01M 4/38; H01M 4/48; H01M 4/587; H01M 10/052; H01M 10/0567; H01M 10/0569;** Y02E 60/10

(86) International application number:
**PCT/JP2024/035246**

(87) International publication number:
**WO 2025/089000 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023 JP 2023182956**



(71) Applicant: **Panasonic Energy Co., Ltd.**
**Moriguchi-shi, Osaka 570-8511 (JP)**

(72) Inventor: **TAKAI, Yasuyuki**
**Kadoma-shi, Osaka 571-0057 (JP)**

(74) Representative: **Novagraaf International SA**
**Chemin de l'Echo 3**
**1213 Onex, Geneva (CH)**


(54) **NON-AQUEOUS ELECTROLYTE SECONDARY BATTERY**


(57) Provided is a non-aqueous electrolyte secondary battery wherein: a negative electrode (12) has a negative electrode current collector (40) and a negative electrode mixture layer (42) disposed on a surface of the negative electrode current collector (40); the negative electrode mixture layer (42) contains a first negative electrode active material having a first internal porosity and a second negative electrode active material having a second internal porosity larger than the first internal porosity; the first negative electrode active material is contained in a larger amount on the surface side of the negative electrode mixture layer (42); a non-aqueous electrolyte contains fluoroethylene carbonate and a sultone compound having an unsaturated bond at the least; and when the concentration of the sultone compound is X% by mass and the concentration of the fluoroethylene carbonate is Y% by mass in the non-aqueous electrolyte, the following relationships are satisfied: $0.01 \leq X \leq 5.0$, $0.01 \leq Y \leq 2.0$, and $X/Y > 0.5$.


Figure 2

12
44
46
42
40
46
44
42




Processed by Luminess, 75001 PARIS (FR)

## Description

TECHNICAL FIELD

The present disclosure relates to a non-aqueous electrolyte liquid secondary battery.

BACKGROUND ART

Patent Literature 1 discloses a non-aqueous electrolyte liquid secondary battery using densified carbon having an internal porosity of less than or equal to 5% for a carbon material as a negative electrode active material. Patent Literature 2 discloses a non-aqueous electrolyte liquid secondary battery using a carbon material including: a first carbon material having an internal porosity of greater than or equal to 1% and less than 23%; and a second carbon material having an internal porosity of greater than or equal to 23% and less than or equal to 40%, as a negative electrode active material.

CITATION LIST

PATENT LITERATURE

PATENT LITERATURE 1: Japanese Unexamined Patent Application Publication No. Hei 9-320600
PATENT LITERATURE 2: Japanese Unexamined Patent Application Publication No. 2014-67638

SUMMARY

With the spread of non-aqueous electrolyte liquid secondary batteries for on-vehicle use and electrical storage use in recent years, a non-aqueous electrolyte liquid secondary battery having excellent charge-discharge cycle characteristics has been required. The non-aqueous electrolyte liquid secondary battery may generate gas due to decomposition of a non-aqueous electrolyte liquid and the like with repeated charge and discharge to cause expansion of the non-aqueous electrolyte liquid secondary battery. From the viewpoint of achieving safety of the non-aqueous electrolyte liquid secondary battery, it has also been required that the gas generation due to repeated charge and discharge is inhibited to reduce an expansion volume of the battery.

A non-aqueous electrolyte liquid secondary battery of an aspect of the present disclosure is a non-aqueous electrolyte liquid secondary battery comprising: a positive electrode; a negative electrode; and a non-aqueous electrolyte liquid, wherein the negative electrode has a negative electrode current collector and a negative electrode mixture layer disposed on a surface of the negative electrode current collector, the negative electrode mixture layer includes a first negative electrode active material with a first internal porosity and a second negative electrode active material with a second internal porosity, the first internal porosity is smaller than the second internal porosity, when the negative electrode mixture layer is bisected in a thickness direction, a region on a surface side of the negative electrode mixture layer is defined as a first region, and a region of the negative electrode mixture layer on a side of the negative electrode current collector is defined as a second region, the first negative electrode active material is contained more in the first region than in the second region, the non-aqueous electrolyte liquid includes at least a sultone compound represented by Formula (I) and fluoroethylene carbonate, and in the non-aqueous electrolyte liquid, when a concentration of the sultone compound is defined as X mass% and a concentration of the fluoroethylene carbonate is defined as Y mass%, X and Y satisfy $0.01 \leq X \leq 5.0$, $0.01 \leq Y \leq 2.0$, and $X/Y > 0.5$,

[Formula 1]

(I)

wherein R1 to R4 each independently represent a hydrogen atom or a substituent, and the substituent includes a halogen

atom, a hydrocarbon group, a hydroxy group, an amino group, or an ester group.

According to the non-aqueous electrolyte liquid secondary battery of an aspect of the present disclosure, the expansion volume of the battery with repeated charge and discharge may be inhibited while improving charge-discharge cycle characteristics.

## BRIEF DESCRIPTION OF DRAWING

FIG. 1 is a sectional view of a non-aqueous electrolyte liquid secondary battery of an example of an embodiment.
FIG. 2 is a sectional view of a negative electrode of an example of an embodiment.
FIG. 3 is a sectional view of graphite particles in a negative electrode mixture layer.

## DESCRIPTION OF EMBODIMENTS

Hereinafter, an example of an embodiment of the non-aqueous electrolyte liquid secondary battery according to the present disclosure will be described in detail with reference to the drawings. The scope of the present disclosure includes constitutions composed of selective combinations of constitutional elements of a plurality of embodiments and modified examples described below.

Hereinafter, a cylindrical battery in which a wound electrode assembly 14 is housed in a bottomed cylindrical housing can 16 will be exemplified as the non-aqueous electrolyte liquid secondary battery, but the exterior body of the battery is not limited to the cylindrical housing can. The secondary battery according to the present disclosure may be, for example, a rectangular battery comprising a rectangular housing can, a coin battery comprising a coin-shaped housing can, or a pouch battery comprising an exterior body constituted of laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

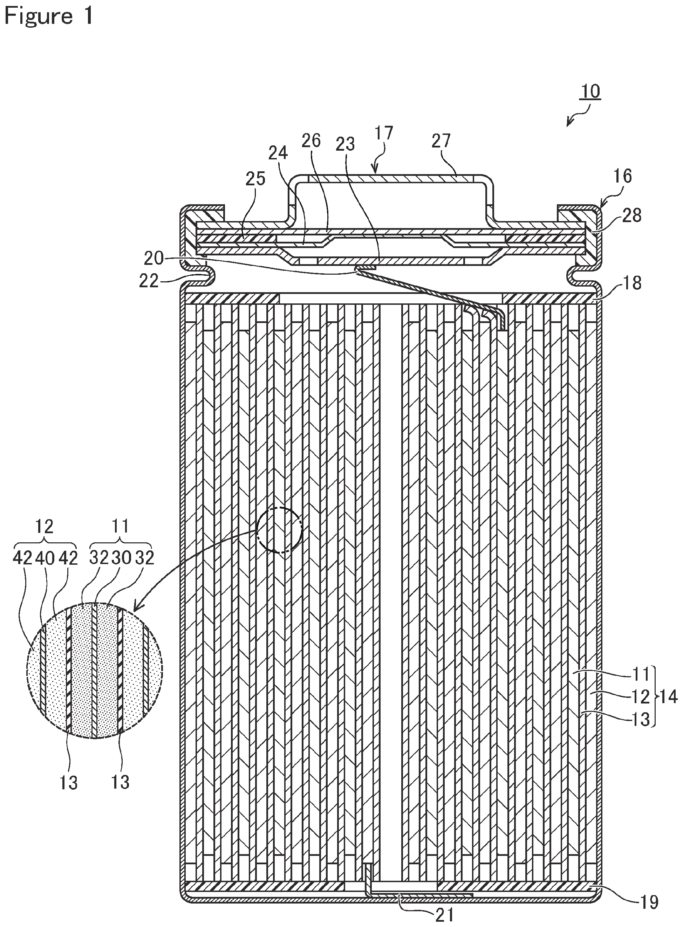

FIG. 1 is a sectional view of a non-aqueous electrolyte liquid secondary battery 10 of an example of an embodiment. As illustrated in FIG. 1, the non-aqueous electrolyte liquid secondary battery 10 comprises the wound electrode assembly 14, a non-aqueous electrolyte liquid, and the housing can 16 housing the electrode assembly 14 and the non-aqueous electrolyte liquid. The electrode assembly 14 has a positive electrode 11, a negative electrode 12, and a separator 13, and has a wound structure in which the positive electrode 11 and the negative electrode 12 are spirally wound via the separator 13. The housing can 16 is a bottomed cylindrical metallic container opened on one side in the axial direction, and the opening of the housing can 16 is capped with a sealing assembly 17. Hereinafter, for convenience of description, the sealing assembly 17 side of the battery will be described as "the upper side", and the bottom side of the housing can 16 will be described as "the lower side".

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the housing can 16 by welding or the like, and the housing can 16 becomes a negative electrode terminal.

A gasket 28 is provided between the housing can 16 and the sealing assembly 17 to achieve sealability inside the battery. On the housing can 16, a grooved portion 22 in which a part of a side wall thereof projects inward to support the sealing assembly 17 is formed. The grooved portion 22 is preferably formed in a circular shape along a circumferential direction of the housing can 16, and supports the sealing assembly 17 with the upper face thereof. The sealing assembly 17 is fixed on the upper part of the housing can 16 with the grooved portion 22 and with an opening end portion of the housing can 16 crimped to the sealing assembly 17.

The sealing assembly 17 has a stacked structure of the internal terminal plate 23, a lower vent member 24, an

insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts. If the internal pressure of the battery increases due to abnormal heat generation, the lower vent member 24 is deformed so as to push the upper vent member 26 up toward the cap 27 side and breaks, thereby cutting off a current pathway between the lower vent member 24 and the upper vent member 26. If the internal pressure further increases, the upper vent member 26 breaks, and gas is discharged through an opening portion of the cap 27.

Hereinafter, the positive electrode 11, the negative electrode 12, the separator 13, and the non-aqueous electrolyte liquid that constitute the electrode assembly 14, specifically the negative electrode 12 and the non-aqueous electrolyte liquid, will be described in detail.

[Positive Electrode]

The positive electrode 11 has a positive electrode current collector 30 and a positive electrode mixture layer 32 disposed on the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 32 includes a positive electrode active material, a conductive agent, and a binder. The positive electrode 11 may be produced by, for example, applying a positive electrode mixture slurry including the positive electrode active material, the conductive agent, the binder, and the like on the positive electrode current collector 30, and drying and subsequently compressing the coating film to form the positive electrode mixture layer 32 on both the surfaces of the positive electrode current collector 30.

The positive electrode mixture layer 32 includes a particle lithium-containing composite oxide as the positive electrode active material. The lithium-containing composite oxide is a composite oxide containing metal elements such as Co, Mn, Ni, and Al in addition to Li. The metal element to constitute the lithium-containing composite oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among these, at least one selected from the group consisting of Co, Ni, Al, and Mn is preferably contained. An example of the preferable composite oxide includes a lithium-containing composite oxide containing Ni, Co, and Mn and a lithium-containing composite oxide containing Ni, Co, and Al.

The lithium-containing composite oxide is in the form of, for example, secondary particles each formed by aggregation of a plurality of primary particles. A volume-based median diameter (D50) of the lithium-containing composite oxide is not particularly limited, and is greater than or equal to 3 μm and less than or equal to 30 μm as an example, and preferably greater than or equal to 5 μm and less than or equal to 25 μm. When the lithium-containing composite oxide is in the form of the secondary particles each formed by aggregation of the primary particles, the D50 of the lithium-containing composite oxide means a D50 of the secondary particles. The D50 means a particle diameter at which a cumulative frequency is 50% from a smaller particle diameter side in volume-based particle size distribution. The particle size distribution of the lithium-containing composite oxide may be measured by using a laser diffraction-type particle size distribution measuring device (for example, MT3000II, manufactured by MicrotracBEL Corp.) with water as a dispersion medium.

An average particle diameter of the primary particles constituting the lithium-containing composite oxide is, for example, greater than or equal to 0.05 μm and less than or equal to 1 μm. The average particle diameter of the primary particles is calculated by averaging diameters of circumscribed circles of the primary particles extracted by analyzing a scanning electron microscope (SEM) image of a cross section of the secondary particles.

Examples of the conductive agent included in the positive electrode mixture layer 32 may include carbon materials such as carbon black such as acetylene black and Ketjenblack, graphite, carbon nanotube (CNT), carbon nanofiber, and graphene. Examples of the binder included in the positive electrode mixture layer 32 may include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide (PEO), and the like.

[Negative Electrode]

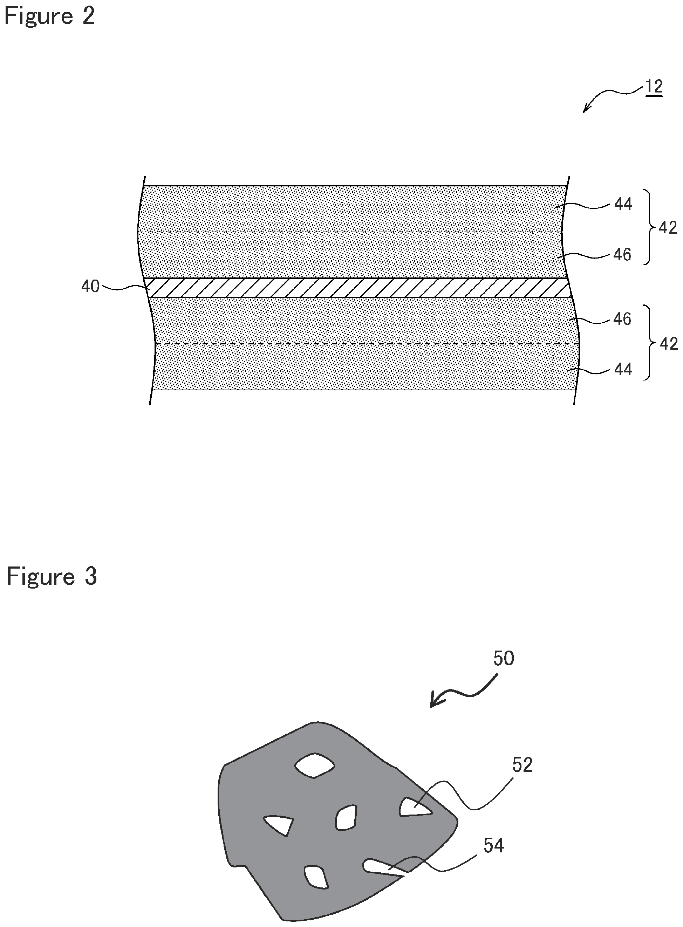

FIG. 2 is a sectional view illustrating the negative electrode 12 of an example of an embodiment. The negative electrode 12 has a negative electrode current collector 40 and a negative electrode mixture layer 42 disposed on a surface of the negative electrode current collector 40.

For the negative electrode current collector 40, a foil of a metal stable within a potential range of the negative electrode 12, such as copper, a film in which such a metal is disposed on a surface thereof, and the like may be used. A thickness of the negative electrode current collector 40 is not particularly limited, but preferably greater than or equal to 1

μm and less than or equal to 50 μm, and more preferably greater than or equal to 5 μm and less than or equal to 20 μm from the viewpoint of balance between strength and lightweighting of the negative electrode 12.

The negative electrode mixture layer 42 includes a negative electrode active material and a binder, for example. Note that the negative electrode active material refers to a material to exhibit capacity due to occlusion and release of lithium ions. The negative electrode 12 may be produced by, for example, preparing a negative electrode mixture slurry including the negative electrode active material, the binder, and the like, applying and drying this negative electrode mixture slurry on the negative electrode current collector 40 to form the negative electrode mixture layer 42, and rolling this negative electrode mixture layer 42. The method for producing the negative electrode mixture layer 42 will be described in detail later.

The negative electrode active material includes: a first negative electrode active material with a first internal porosity; and a second negative electrode active material with a second internal porosity larger than the first internal porosity. Although the detail will be described later, a content of the first negative electrode active material is high on the surface side of the negative electrode mixture layer 42, and a content of the second negative electrode active material is high on the negative electrode current collector 40 side of the negative electrode mixture layer 42. The first negative electrode active material and the second negative electrode active material are graphite particles, for example. Hereinafter, the first negative electrode active material will be described as first graphite particles, and the second negative electrode active material will be described as second graphite particles.

An internal porosity of the first graphite particles (a first internal porosity) is appropriately smaller than an internal porosity of the second graphite particles (a second internal porosity), and preferably less than or equal to 5%, more preferably greater than or equal to 1% and less than or equal to 5%, and further preferably greater than or equal to 3% and less than or equal to 5%. Setting the first internal porosity to be less than or equal to 5% inhibits a decomposition reaction of the non-aqueous electrolyte liquid due to a side reaction between the graphite particles and the non-aqueous electrolyte liquid. Although the detail will be described later, the non-aqueous electrolyte liquid of the present embodiment includes a sultone compound and fluoroethylene carbonate (FEC) at predetermined concentrations. As a result, a composite coating composed of the sultone compound and FEC is formed on surfaces of the graphite particles. Setting the first internal porosity to be less than or equal to 5% to inhibit the decomposition reaction of the non-aqueous electrolyte liquid facilitates retention of the coating on the surfaces of the graphite particles. As a result, the capacity of the battery may be retained even after charge-discharge cycles, and the charge-discharge cycle characteristics may be improved.

The internal porosity of the second graphite particles (the second internal porosity) is preferably greater than or equal to 8%, more preferably greater than or equal to 10%, and further preferably greater than or equal to 12%. As noted above, the content of the second graphite particles is high on the negative electrode current collector side of the negative electrode mixture layer 42. Thus, setting the second internal porosity to be greater than or equal to 8% may improve adhesiveness between the negative electrode current collector 40 and the negative electrode mixture layer 42. The second internal porosity is preferably less than or equal to 20%, more preferably less than or equal to 18%, and further preferably less than or equal to 16%. The second internal porosity of more than 20% may cause the decomposition reaction of the non-aqueous electrolyte liquid due to the side reaction between the graphite particles and the non-aqueous electrolyte liquid. Therefore, the second internal porosity is preferably greater than or equal to 8% and less than or equal to 20%, more preferably greater than or equal to 10% and less than or equal to 18%, and further preferably greater than or equal to 12% and less than or equal to 16%.

FIG. 3 is a view schematically illustrating a cross section of graphite particles 50 in the negative electrode mixture layer 42. As illustrated in FIG. 3, the graphite particles 50 have: closed gaps 52 unconnected from the particle inside to the particle surface (hereinafter, internal gaps 52); and gaps 54 connected from the particle inside to the particle surface (hereinafter, external gaps 54) in view of the cross section of the graphite particles 50. The internal porosity of the graphite particles herein is a two-dimensional value determined from a ratio of an area of the internal gaps 52 of the graphite particles 50 relative to a sectional area of the graphite particles 50. The internal porosity of the graphite particles 50 is determined by the following procedure.

<Method for Measuring Internal Porosity>

(1) The cross section of the negative electrode mixture layer 42 is exposed. Examples of the method for exposing the cross section include a method of cutting a part of the negative electrode and processing it with an ion-milling apparatus (for example, IM4000PLUS, manufactured by Hitachi High-Tech Corporation) to expose the cross section of the negative electrode mixture layer 42.

(2) By using a scanning electron microscope, a backscattered electron image of the exposed cross section of negative electrode mixture layer 42 is photographed. The magnification with photographing the backscattered electron image is greater than or equal to 3000 and less than or equal to 5000.

(3) The sectional image obtained as above is imported into a computer, and subjected to a binarization processing by using an image analysis software (for example, ImageJ, available from National Institutes of Health). Obtained is a binarization-processed image in which a particle cross section in the sectional image is converted in black and gaps present in the particle cross section are converted in white.

(4) From the binarization-processed image, graphite particles having a particle diameter of greater than or equal to 5 μm and less than or equal to 50 μm are selected, and an area of the cross sections of the graphite particles and an area of the internal gaps present in the cross section of the graphite particles are calculated. Here, the area of the cross section of the graphite particles refers to an area of a region surrounded by peripheries of the graphite particles, specifically an area of all the sectional parts of the graphite particles. It may be difficult to determine whether gaps having a width of less than or equal to 3 μm among gaps present on the cross section of the graphite particles are the internal gaps or the external gaps on the image analysis. Thus, the gaps having a width of less than or equal to 3 μm may be regarded as the internal gaps. From the calculated area of the cross section of the graphite particles and the area of the internal gaps of the cross section of the graphite particles, the internal porosity of the graphite particles (the area of the internal gaps of the cross section of the graphite particles × 100 / the area of the cross section of the graphite particles) is calculated. The internal porosities of the first graphite particles and the second graphite particles are each an average value of ten of the first graphite particles and second graphite particles.

A BET specific surface area of the first graphite particles is preferably less than or equal to 3.5 $m^2/g$, and more preferably less than or equal to 3.0 $m^2/g$. When the BET specific surface area of the first graphite particles is less than or equal to 3.5 $m^2/g$, the side reaction between the first graphite particles and the non-aqueous electrolyte liquid may be more inhibited. A BET specific surface area of the second graphite particles is preferably greater than or equal to 3.5 $m^2/g$, and more preferably greater than or equal to 4.0 $m^2/g$. When the BET specific surface area of the second graphite particles is greater than or equal to 3.5 $m^2/g$, the second graphite particles may be easily filled at a high density when the negative electrode mixture layer 42 is produced by rolling. As a result, the capacity of the battery may be increased.

Volume-based median diameters (D50) of the first graphite particles and the second graphite particles may be, for example, greater than or equal to 1 μm and less than or equal to 30 μm, and may be greater than or equal to 10 μm and less than or equal to 25 μm. Particle size distribution of the first graphite particles and the second graphite particles may be measured by using a laser diffraction-type particle size distribution measuring device (for example, MT3000II, manufactured by MicrotracBEL Corp.) with water as a dispersion medium as in the case of the positive electrode active material.

The first graphite particles and the second graphite particles are manufactured as follows, for example.

<First Graphite Particles>

For example, cokes (precursor) that become a main raw material is pulverized into a predetermined size, the pulverized product is fired in an aggregated state with a binder at a temperature of greater than or equal to 2600°C for graphitization, and then sieved to obtain the first graphite particles having a desired size. Here, the internal porosity may be regulated by a particle diameter of the precursor after crushing, a particle diameter of the precursor in the aggregated state, and the like. For example, a volume-based median diameter (D50) of the precursor after crushing is preferably within a range of greater than or equal to 12 μm and less than or equal to 20 μm. When the internal porosity is reduced, the particle diameter of the precursor after crushing is preferably increased.

<Second Graphite Particles>

For example, cokes (precursor) that become a main raw material is pulverized into a predetermined size, the pulverized product is aggregated with a binder, and then the pulverized product is fired and graphitized at a temperature of greater than or equal to 2600°C in a state of pressure forming into a block shape. The graphitized block-shaped formed product is pulverized and sieved to obtain the second graphite particles having a desired size. Here, the internal porosity may be regulated by an amount of a volatile component added into the block-shaped formed product. When a part of the binder added into the cokes (precursor) is evaporated during the firing, the binder may be used as the volatile component. Examples of such a binder include pitch.

The first graphite particles and the second graphite particles may be natural graphite and artificial graphite and are not particularly limited, but preferably artificial graphite in terms of ease of regulating the internal porosity and the like. Spacings ($d_{002}$) of a (002) face of the first graphite particles and the second graphite particles by an X-ray wide-angle diffraction method is preferably, for example, greater than or equal to 0.3354 nm, more preferably greater than or equal to 0.3357 nm, preferably less than 0.340 nm, and more preferably less than or equal to 0.338 nm. Crystallite sizes (Lc(002)) of the first graphite particles and the second graphite particles determined by an X-ray diffraction method is preferably, for example, greater than or equal to 5 nm, more preferably greater than or equal to 10 nm, preferably less than or equal to 300 nm, and more preferably less than or equal to 200 nm. The spacing ($d_{002}$) and the crystallite size (Lc(002)) satisfying the

above ranges tend to increase the battery capacity of the non-aqueous electrolyte liquid secondary battery compared with a case of not satisfying the above ranges.

As illustrated in FIG. 2, when the negative electrode mixture layer 42 is bisected in a thickness direction, a region on a surface side of the negative electrode mixture layer 42 is defined as a first region 44, and a region of the negative electrode mixture layer 42 on a side of the negative electrode current collector 40 is defined as a second region 46, a content of the first graphite particles (the first negative electrode active material) in the first region 44 is higher than in the second region 46. Note that, bisecting the negative electrode mixture layer 42 in the thickness direction means dividing it in half at a middle M of the thickness of the negative electrode mixture layer 42 when a stacking direction of the negative electrode current collector 40 and the negative electrode mixture layer 42 is defined as the thickness direction of the negative electrode mixture layer 42. The thickness of the negative electrode mixture layer 42 is not particularly limited, but, for example, greater than or equal to 50 μm and less than or equal to 300 μm on one side of the negative electrode current collector 40.

As a result of investigation by the present inventors, it has been revealed that the decomposition reaction of the non-aqueous electrolyte liquid due to the side reaction between the negative electrode active material and the non-aqueous electrolyte liquid is significantly affected by characteristics of the negative electrode active material included in the first region 44. The first graphite particles included at a high content in the first region 44 have the small internal porosity as noted above, and hardly cause the side reaction with the non-aqueous electrolyte liquid. Thus, the first graphite particles included in the first region 44 at a higher content than in the second region 46 inhibit the decomposition reaction of the non-aqueous electrolyte liquid on the surface side of the negative electrode mixture layer 42 when charge and discharge are repeated. As a result, the charge-discharge cycle characteristics of the battery may be improved. In addition, the first graphite particles with the small internal porosity are hardly crushed when the negative electrode mixture layer 42 is produced by rolling. Accordingly, a path for the non-aqueous electrolyte liquid is easily achieved in the first region 44. As a result, reaction unevenness in the thickness direction of the negative electrode mixture layer 42 may be reduced to improve the charge-discharge cycle characteristics of the battery.

If the content of the first graphite particles in the second region 46 is higher than in the first region 44, it is difficult to sufficiently inhibit the decomposition reaction of the non-aqueous electrolyte liquid on the surface side of the negative electrode mixture layer 42. If a large amount of the first graphite particles is included over the thickness direction of the negative electrode mixture layer 42, that is, if both the first region 44 and the second region 46 include a large amount of the first graphite particles, adhesiveness between the negative electrode current collector 40 and the negative electrode mixture layer 42 deteriorate, and the negative electrode mixture layer 42 may be peeled when charge and discharge are repeated. As a result, the charge-discharge cycle characteristics may deteriorate.

The content of the first graphite particles in the first region 44 may be higher than in the second region 46. A ratio (WA1/WA2) of a mass (WA1) of the first graphite particles included in the first region 44 relative to a mass (WA2) of the first graphite particles included in the second region 46 is preferably greater than or equal to 2.0, preferably greater than or equal to 2.5, and further preferably greater than or equal to 5.0. In this case, the decomposition reaction of the non-aqueous electrolyte liquid on the surface side of the negative electrode mixture layer 42 may be inhibited while retaining the adhesiveness between the negative electrode current collector 40 and the negative electrode mixture layer 42. Note that the first graphite particles may be included in substantially only the first region 44.

The content of the first graphite particles in the first region 44 is preferably greater than or equal to 20 mass%, more preferably greater than or equal to 30 mass%, and further preferably greater than or equal to 40 mass% relative to the total mass of the negative electrode active material in the first region 44. Setting the content of the first graphite particles in the first region 44 to be greater than or equal to 20 mass% may inhibit the decomposition reaction of the non-aqueous electrolyte liquid on the surface side of the negative electrode mixture layer 42. In addition, the content of the first graphite particles in the first region 44 is preferably less than or equal to 70 mass%, more preferably less than or equal to 65 mass%, and further preferably less than or equal to 60 mass% relative to the total mass of the negative electrode active material in the first region 44. The first graphite particles having the small internal porosity are hardly crushed as noted above when the negative electrode mixture layer 42 is produced by rolling. Thus, it may be difficult to produce the negative electrode mixture layer 42 having uniform thickness by rolling if the content of the first graphite particles in the first region 44 is greater than 70 mass%. Therefore, the content of the first graphite particles in the first region 44 is preferably greater than or equal to 20 mass% and less than or equal to 70 mass%, more preferably greater than or equal to 30 mass% and less than or equal to 65 mass%, and further preferably greater than or equal to 40 mass% and less than or equal to 60 mass% relative to the total mass of the negative electrode active material in the first region 44.

The content of the second graphite particles is preferably higher in the second region 46 than in the first region 44. A ratio (WB2/WB1) of a mass (WB2) of the second graphite particles included in the second region 46 relative to a mass (WB1) of the second graphite particles included in the first region 44 is preferably greater than or equal to 1.2, more preferably greater than or equal to 1.5, and further preferably greater than or equal to 1.7. In this case, the adhesiveness between the negative electrode current collector 40 and the negative electrode mixture layer 42 is more improved to more improve the charge-discharge cycle characteristics. Note that, although the second graphite particles may be included in

substantially only the second region 46, the second graphite particles are preferably included also in the first region 44.

The content of the second graphite particles in the second region 46 is preferably greater than or equal to 50 mass%, more preferably greater than or equal to 60 mass%, and further preferably greater than or equal to 70 mass% relative to the total mass of the negative electrode active material in the second region 46. Setting the content of the first graphite particles in the first region 44 to be greater than or equal to 50 mass% more improves the adhesiveness between the negative electrode current collector 40 and the negative electrode mixture layer 42. In addition, an upper limit of the content of the second graphite particles in the second region 46 is 100 mass%, for example. That is, the negative electrode active material present in the second region 46 may be substantially only the second graphite particles. Therefore, the content of the second graphite particles in the second region 46 is preferably greater than or equal to 50 mass% and less than or equal to 100 mass%, more preferably greater than or equal to 60 mass% and less than or equal to 100 mass%, and further preferably greater than or equal to 70 mass% and less than or equal to 100 mass% relative to the total mass of the negative electrode active material in the second region 46.

The negative electrode mixture layer 42 preferably includes a Si-containing material as the negative electrode active material. The Si-containing material may occlude a large amount of lithium ions per unit mass compared with the carbon material such as the graphite particles. Thus, when the negative electrode mixture layer 42 includes the Si-containing material, the capacity of the battery may be increased.

Meanwhile, the Si-containing material largely changes in volume (expansion and contraction) during charge and discharge compared with the carbon material. Thus, a coating formed on a surface of the Si-containing material is easily broken due to the change in volume. As a result, the decomposition reaction of the non-aqueous electrolyte liquid may continuously occur on the surface of the Si-containing material. Although the detail will be described later, a composite coating that is formed on the surface of the Si-containing material and that is composed of a sultone compound and fluoroethylene carbonate is hardly broken against the change in volume of the Si-containing material in the present embodiment. That is, it can be said that the effect of the present disclosure is more remarkably exhibited when the negative electrode mixture layer 42 includes the Si-containing material.

The Si-containing material may be any material containing Si. An example thereof includes a silicon alloy, a silicon compound, and a composite material containing Si, and the composite material containing Si is specifically preferable. A volume-based median diameter (D50) of the composite material is typically smaller than a volume-based median diameter (D50) of graphite. The volume-based median diameter (D50) of the composite material is, for example, greater than or equal to 1 μm and less than or equal to 15 μm. The Si-containing material may be used singly, or may be used in combination of two or more thereof.

A content of the Si-containing material is preferably greater than or equal to 3 mass%, more preferably greater than or equal to 5 mass%, and further preferably greater than or equal to 8 mass% relative to the total mass of the negative electrode active material. Setting the content of the Si-containing material to be greater than or equal to 3 mass% relative to the total mass of the negative electrode active material may increase the capacity of the battery. In addition, the content of the Si-containing material is preferably less than or equal to 70 mass%, more preferably less than or equal to 65 mass%, and further preferably less than or equal to 60 mass% relative to the total mass of the negative electrode active material. As noted above, the Si-containing material largely changes in volume during charge and discharge compared with the carbon material. Thus, if the content of the Si-containing material is greater than 70 mass%, a conductive path in the negative electrode mixture layer 42 including the Si-containing material is easily cut to advance isolation of the Si-containing material, which may deteriorate the charge-discharge cycle characteristics. Therefore, the content of the Si-containing material is preferably greater than or equal to 3 mass% and less than or equal to 70 mass%, more preferably greater than or equal to 5 mass% and less than or equal to 65 mass%, and further preferably greater than or equal to 8 mass% and less than or equal to 60 mass% relative to the total mass of the negative electrode active material. Note that the contents of the Si-containing material in the first region 44 and in the second region 46 may be the same as or different from each other.

A preferable Si-containing material is in the form of composite particles including an ion-conductive phase and Si phases dispersed in the ion-conductive phase. The Si phases are formed by dispersing Si as fine particles. On the composite particles, a conductive layer covering a part of a surface of the ion-conductive phase may be formed. The conductive layer is constituted of a material having conductivity higher than that of the ion-conductive phase, and forms a good conductive path in the negative electrode mixture layer 42. The conductive layer includes, for example, conductive carbon, and covers greater than or equal to 30% and less than or equal to 70% of an area of the surface of the ion-conductive phase. Note that the covering rate with the conductive layer may be calculated by using X-ray photoelectron spectrometry (XPS), for example.

The ion-conductive phase is a continuous phase constituted with aggregation of particles finer than the above Si phases. The ion-conductive phase is at least one selected from the group consisting of a silicate phase, a carbon phase, a silicide phase, and a silicon oxide phase, for example.

The silicate phase preferably includes, for example, at least one element selected from the group consisting of lithium, sodium, potassium, rubidium, cesium, francium, beryllium, magnesium, calcium, strontium, barium, and radium in terms of high lithium-ion conductivity and the like. Among these, the silicate phase is preferably a silicate phase including

lithium (hereinafter, which may be referred to as the lithium silicate phase) in terms of high lithium-ion conductivity and the like.

The lithium silicate phase is represented by a formula: $Li_{2z}SiO_{2+z}$ ($0 < z < 2$), for example. From the viewpoints of stability, ease of production, lithium-ion conductivity, and the like, "z" preferably satisfies a relationship of $0 < z < 1$, and more preferably $z = 1/2$.

An example of the preferable composite material containing Si is composite particles that have a sea-island structure in which fine Si is substantially uniformly dispersed in an amorphous silicon oxide phase and that is entirely represented by a general formula $SiO_x$ ($0 < x \leq 2$). A main component of the silicon oxide may be silicon dioxide. A content rate (x) of oxygen relative to Si satisfies, for example, $0.5 \leq x < 2.0$, and preferably satisfies $0.8 \leq x < 1.5$.

A content of the Si phases constituting the composite particles is, for example, greater than or equal to 30 mass% and less than or equal to 80 mass%. The content of the Si phases may be measured by Si-NMR. The measuring conditions are as follows, for example.

Measuring apparatus: a solid nuclear magnetic resonance spectrometer (INOVA-400), manufactured by Varian, Inc.
Probe: Varian 7 mm CPMAS-2
MAS: 4.2 kHz
MAS speed: 4 kHz
Pulse: DD (45° pulse + signal acquisition time 1H decoupling)
Repeating time: 1200 sec
Observation width: 100 kHz
Observation center: near -100 ppm
Signal acquisition time: 0.05 sec
Accumulation: 560
Sample amount: 207.6 mg

A crystallite size of the Si phase constituting the composite particles is, for example, greater than or equal to 10 nm and less than or equal to 30 nm. The crystallite size of the Si phase is calculated with Scherrer equation from a half-value width of an analysis peak assigned to a Si (111) face of the Si phase of an X-ray diffraction pattern.

Examples of the binder included in the negative electrode mixture layer 42 include styrene-butadiene rubber (SBR), nitrile-butadiene rubber (NBR), fluorine-containing resins such as polytetrafluoroethylene (PTFE) and polyvinylidene fluoride (PVDF), polyacrylonitrile (PAN), a polyimide-type resin, an acrylic resin, and a polyolefin-type resin. Among these, SBR and NBR are preferable, and SBR is particularly preferable. These may be used singly, or may be used in combination of two or more thereof. A content of the binder in the negative electrode mixture layer 42 is, for example, greater than or equal to 0.5 mass% and less than or equal to 5 mass% relative to the total mass of the negative electrode mixture layer 42.

The negative electrode mixture layer 42 may further contain a thickener. Examples of the thickener include carboxymethylcellulose (CMC) or a salt thereof (such as CMC-Na), polyacrylic acid (PAA) or a salt thereof (which may be PAA-Na, PAA-K, and the like, or a partially neutralized salt), polyethylene oxide (PEO), and polyvinyl alcohol (PVA). These may be used singly, or may be used in combination of two or more thereof. A content of the thickener in the negative electrode mixture layer 42 is, for example, greater than or equal to 0.5 mass% and less than or equal to 10 mass% relative to the total mass of the negative electrode mixture layer 42.

Next, an example of a method for producing the negative electrode mixture layer 42 will be described. For example, the negative electrode active material including the first graphite particles and the second graphite particles, the binder, and a solvent such as water are mixed to prepare a negative electrode mixture slurry for the outer surface side (a first negative electrode mixture slurry). Separately from this, the negative electrode active material including the second graphite particles (the first graphite particles as necessary), the binder, and a solvent such as water are mixed to prepare a negative electrode mixture slurry for the negative electrode current collector side (a second negative electrode mixture slurry). Then, the second negative electrode mixture slurry is applied on both surfaces of the negative electrode current collector 40, the coating is dried, then the first negative electrode mixture slurry is applied on both surfaces of the coating film composed of the second negative electrode mixture slurry, and the coating film is dried to form the negative electrode mixture layer 42.

A ratio of the applying amount of the first negative electrode mixture slurry relative to the applying amount of the second negative electrode mixture slurry is, for example, greater than or equal to 0.1 and less than or equal to 10.0, and preferably greater than or equal to 0.2 and less than or equal to 5.0 in terms of mass. That is, a ratio of a thickness of the upper layer formed with the first negative electrode mixture slurry relative to a thickness of the lower layer formed with the second negative electrode mixture slurry is, for example, greater than or equal to 0.1 and less than or equal to 10.0, and preferably greater than or equal to 0.2 and less than or equal to 5.0.

In the above method, the negative electrode mixture slurry for the negative electrode current collector side is

applied and dried, and then the negative electrode mixture slurry for the outer surface side is applied. However, the producing method may be a method in which the negative electrode mixture slurry for the outer surface side is applied after applying and before drying the negative electrode mixture slurry for the negative electrode current collector side, or the negative electrode mixture slurry for the negative electrode current collector side and the negative electrode mixture slurry for the outer surface side may be simultaneously applied. The number of types of the negative electrode mixture slurry is not limited to two, and may be greater than or equal to three. In other words, the negative electrode mixture layer 42 may have a multilayer structure composed of greater than or equal to three layers.

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On an interface between the separator 13 and at least one of the positive electrode 11 and the negative electrode 12, a filler layer including an inorganic filler may be formed. Examples of the inorganic filler include an oxide containing a metal such as Ti, Al, Si, and Mg, and a phosphoric acid compound. The filler layer may be formed by applying a slurry containing the filler on the surface of the positive electrode 11, the negative electrode 12, or the separator 13.

[Non-Aqueous Electrolyte Liquid]

The non-aqueous electrolyte liquid includes a non-aqueous solvent and an electrolyte salt dissolved in the non-aqueous solvent. The non-aqueous electrolyte liquid includes at least a sultone compound having an unsaturated bond and fluoroethylene carbonate (FEC) as the non-aqueous solvent. In the non-aqueous electrolyte liquid, when a concentration of the sultone compound is defined as X mass% and a concentration of FEC is defined as Y mass%, X and Y satisfy $0.01 \leq X \leq 5.0$, $0.01 \leq Y \leq 2.0$, and $X/Y > 0.5$. In this case, the decomposition reaction of the non-aqueous electrolyte liquid on the surface of the negative electrode mixture layer 42 during charge and discharge is inhibited to improve the charge-discharge cycle characteristics. This is presumably because the sultone compound and FEC form a good composite coating on the surface of the negative electrode active material. This coating has not only excellent durability (strength) but also excellent followability (flexibility) against the change in volume of the negative electrode active material.

As noted above, in the negative electrode mixture layer 42 of the present embodiment, the content of the first graphite particles (the first negative electrode active material) with the small internal porosity is high on the surface side of the negative electrode mixture layer 42, and the content of the second graphite particles (the second negative electrode active material) with the internal porosity larger than that of the first graphite particles is high on the negative electrode current collector 40 side of the negative electrode mixture layer 42. Since the first graphite particles with the small internal porosity hardly causes the side reaction with the non-aqueous electrolyte liquid, the decomposition reaction of the non-aqueous electrolyte liquid is inhibited. As a result, the coating formed on the surface of the negative electrode active material may be retained. That is, setting the content of the first graphite particles to be high on the surface side of the negative electrode mixture layer 42 and setting the concentrations of the sultone compound and FEC in the non-aqueous electrolyte liquid to be within the above ranges may specifically improve the charge-discharge cycle characteristics.

Meanwhile, if the concentrations of the sultone compound and FEC in the non-aqueous electrolyte liquid are set to be within the ranges but the content of the first graphite particles is high on the negative electrode current collector 40 side of the negative electrode mixture layer 42, for example, the decomposition reaction of the non-aqueous electrolyte liquid on the surface side of the negative electrode mixture layer 42 easily occurs, which may fail to retain the coating formed on the surface of the negative electrode active material. In addition, if the content of the first graphite particles is set to be higher on the surface side of the negative electrode mixture layer 42, but the concentrations of the sultone compound and FEC in the non-aqueous electrolyte liquid do not satisfy the above ranges, the good composite coating may not be formed on the surface of the negative electrode active material.

The sultone compound is a compound represented by Formula (I). In the formula, R1 to R4 each independently represent a hydrogen atom or a substituent, and the substituent includes a halogen atom, a hydrocarbon group, a hydroxy group, an amino group, or an ester group. The hydrocarbon group includes an alkyl group, an alkenyl group, or the like. The alkyl group and the alkenyl group may be linear or branched. The alkyl group includes a methyl group, an ethyl group, a n-propyl group, an isopropyl group, or the like. The alkenyl group includes a vinyl group, a 1-propenyl group, a 2-propenyl group, or the like. At least one hydrogen atom in the hydrocarbon group may be substituted with a halogen atom. From the viewpoint of improving solubility while retaining good viscosity of the non-aqueous electrolyte liquid, the hydrocarbon group is preferably an alkyl group having greater than or equal to 1 and less than or equal to 5 carbon atoms, and more

preferably an alkyl group having greater than or equal to 1 and less than or equal to 3 carbon atoms. In Formula (I), "n" represents a number of repetition of a methylene group having R3 and R4. "n" represents an integer of greater than or equal to 1 and less than or equal to 3.

[Formula 2]

(I)

Examples of the sultone compound include 1,3-propenesultone (PRS), 1,4-butenesultone, 1,5-pentenesultone, 2-fluoro-1,3-propenesultone, 2-fluoro-1,4-butenesultone, and 2-fluoro-1,5-pentenesultone. Among these, 1,3-propenesultone (PRS) is preferable from the viewpoint of forming the good coating.

The concentration (X mass%) of the sultone compound in the non-aqueous electrolyte liquid is greater than or equal to 0.01 mass%, preferably greater than or equal to 0.05 mass%, and more preferably greater than or equal to 0.1 mass%. Setting X to satisfy $X \geq 0.01$ may form the good coating on the surface of the negative electrode active material. The concentration (X mass%) of the sultone compound in the non-aqueous electrolyte liquid is less than or equal to 5.0 mass%, preferably less than or equal to 4.0 mass%, and more preferably less than or equal to 3.0 mass%. In a case of $X > 5.0$, the coating is excessively formed on the surface of the negative electrode active material to raise reaction resistance, which may deteriorate the charge-discharge cycle characteristics. Therefore, X satisfies $0.01 \leq X \leq 5.0$, preferably satisfies $0.05 \leq X \leq 4.0$, and more preferably satisfies $0.1 \leq X \leq 3.0$.

The concentration (Y mass%) of FEC in the non-aqueous electrolyte liquid is greater than or equal to 0.01 mass%, preferably greater than or equal to 0.05 mass%, and more preferably greater than or equal to 0.1 mass%. Setting Y to satisfy $Y \geq 0.01$ may form the good coating on the surface of the negative electrode active material. The concentration (Y mass%) of the sultone compound in the non-aqueous electrolyte liquid is less than or equal to 2.0 mass%, preferably less than or equal to 1.8 mass%, and more preferably less than or equal to 1.6 mass%. In a case of $Y > 2.0$, the coating is excessively formed on the surface of the negative electrode active material to raise reaction resistance, which may deteriorate the charge-discharge cycle characteristics. Therefore, Y satisfies $0.01 \leq Y \leq 2.0$, preferably satisfies $0.05 \leq Y \leq 1.8$, and more preferably satisfies $0.1 \leq Y \leq 1.6$.

A ratio (X/Y) of the concentration (X) of the sultone compound relative to the concentration (Y) of FEC in the non-aqueous electrolyte liquid is greater than 0.5, preferably greater than or equal to 0.6, and more preferably greater than or equal to 0.7. If X/Y is less than or equal to 0.5, that is, if FEC is excessively present relative to the sultone compound, the expansion volume of the battery increases with repeated charge and discharge. Although the detail mechanism is unclear, the sultone compound has a higher reduction potential than FEC, and the coating of the sultone compound consequently tends to be formed early as compared with the coating of FEC. Thus, if FEC is excessively present relative to the sultone compound, a part of FEC is not utilized for forming the coating, and FEC remains in the non-aqueous electrolyte liquid. As a result, the remaining FEC is decomposed to generate gas with repeated charge and discharge, which is presumed to increase the expansion volume of the battery. That is, in order to form the good composite coating on the surface of the negative electrode active material to reduce the expansion volume of the battery due to the gas generation with repeated charge and discharge while improving the charge-discharge cycle characteristics, X/Y needs to be greater than 0.5. An upper limit value of X/Y is preferably less than or equal to 3.0, and more preferably less than or equal to 2.5 from the viewpoint of forming the good composite coating on the surface of the negative electrode active material.

As noted above, at least a part of the sultone compound and FEC is decomposed in a process of charge and discharge of the battery to be utilized for forming the coating. Thus, the concentration (X mass%) of the sultone compound and the concentration (Y mass%) of FEC refer to concentrations of the sultone compound and FEC before the first charge and discharge.

The non-aqueous electrolyte liquid may include a non-aqueous solvent other than the sultone compound represented by the Formula (1) and FEC. For the non-aqueous solvent, ethers, esters, nitriles such as acetonitrile, amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated chain carbonates, and fluorinated chain carboxylates such as methyl fluoropropionate (FMP).

Examples of the ethers include: cyclic ethers such as 1,3-dioxolane, 4-methyl-1,3-dioxolane, tetrahydrofuran, 2-

methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Examples of the esters include cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate (PA), methyl propionate (MP), ethyl propionate (EP), and propyl propionate (PP).

The non-aqueous electrolyte liquid may include a sultone compound having no unsaturated bond. Examples of the sultone compound having no unsaturated bond include 1,3-propanesultone (PS), 1,4-butanesultone, 1,5-pentanesultone, 2-fluoro-1,3-propanesultone, 2-fluoro-1,4-butanesultone, and 2-fluoro-1,5-pentanesultone.

The non-aqueous electrolyte liquid preferably includes vinylene carbonate (VC) in addition to the sultone compound represented by the Formula (I) and FEC. VC forms a coating on the surface of the negative electrode active material similarly to the sultone compound and FEC. This inhibits the decomposition reaction of the non-aqueous electrolyte liquid on the surface of the negative electrode mixture layer 42 during charge and discharge to improve the charge-discharge cycle characteristics. Since VC has a lower reduction potential than the sultone compound, the coating derived from VC tends to be formed on the coating derived from the sultone compound.

A concentration (Z mass%) of VC in the non-aqueous electrolyte liquid is preferably greater than or equal to 0.5 mass%, more preferably greater than or equal to 0.6 mass%, and further preferably greater than or equal to 0.7 mass%. Setting Z to satisfy $Z \geq 0.5$ may form the good coating derived from VC on the surface of the coating derived from the sultone compound. The concentration (Z mass%) of VC in the non-aqueous electrolyte liquid is preferably less than or equal to 5.0 mass%, more preferably less than or equal to 4.5 mass%, and further preferably less than or equal to 4.0 mass%. In a case of $Z > 5.0$, an amount of VC remaining in the non-aqueous electrolyte liquid may increase. Accordingly, the remaining VC is decomposed to generate gas with repeated charge and discharge, which may increase the expansion volume of the battery. Therefore, Z preferably satisfies $0.5 \leq Z \leq 5.0$, more preferably satisfies $0.6 \leq Z \leq 4.5$, and further preferably satisfies $0.7 \leq Z \leq 4.0$.

For the electrolyte salt, a lithium salt is preferably used. A concentration of the lithium salt is, for example, greater than or equal to 0.5 mol and less than or equal to 3 mol, and preferably greater than or equal to 0.8 mol and less than or equal to 1.5 mol per liter of the non-aqueous solvent. The lithium salt may be used singly, or a plurality of the lithium salts may be used in combination.

An example of the lithium salt includes $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(CnF_{2n+1})_x$ (1<x<6, and "n" represents 1 or 2), $LiB_{10}Cl_{10}$, LiCl, LiBr, LiI, lithium chloroborane, a lithium lower aliphatic carboxylate, borate salts such as $Li[B(C_2O_4)_2]$, $Li_2B_4O_7$, and $Li(B(C_2O_4)F_2)$, and imide salts such as bisfluorosulfonylimide lithium ($LiN(FSO_2)_2$), bistrifluoromethanesulfonylimide lithium ($LiN(CF_3SO_2)_2$), trifluoromethanesulfonylnonafluorobutanesulfonylimide lithium ($LiN(CF_3SO_2)(C_4F_9SO_2)$), bispentafluoroethanesulfonylimide lithium ($LiN(C_2F_5SO_2)_2$), and $LiN(C_1F_{21+1}SO_2)(C_mF_{2m+1}SO_2)$ {"1" and "m" represent integers of greater than or equal to 0}. Among these, $LiPF_6$ is preferable.

EXAMPLES

Hereinafter, the present disclosure will be further described with Examples, but the present disclosure is not limited to these Examples.

<Example 1>

[Production of Positive Electrode]

As a positive electrode active material, aluminum-containing lithium nickel cobaltate ($LiNi_{0.91}Co_{0.04}Al_{0.05}O_2$) was used. Mixing 100 parts by mass of the above positive electrode active material, 1 part by mass of acetylene black, and 0.9 parts by mass of polyvinylidene fluoride was performed in a solvent of N-methyl-2-pyrrolidone (NMP) to prepare a positive electrode mixture slurry. This slurry was applied on both surfaces of aluminum foil having a thickness of 15 $\mu$m, the coating film was dried, and then the coating film was rolled with a roller to produce a positive electrode in which a positive electrode mixture layer (thickness on one side: 90 $\mu$m) was formed on both the surfaces of the positive electrode current collector.

[Production of Graphite Particles A]

Cokes was pulverized until the volume-based median diameter (D50) was 12 μm. Into the pulverized cokes, pitch was added as a binder, and the cokes was aggregated until the volume-based median diameter (D50) was 17 μm. This aggregate was fired at a temperature of 2800°C for graphitization, and then the fired product was sieved by using a sieve with 250 mesh to obtain graphite particles A having a volume-based median diameter (D50) of 23 μm.

[Production of Graphite Particles B]

Cokes was pulverized until the volume-based median diameter (D50) was 15 μm. Into the pulverized cokes, pitch was added as a binder to aggregate the cokes, and then a block-shaped formed product having a density of greater than or equal to 1.6 g/$cm^3$ and less than or equal to 1.9 g/$cm^3$ was obtained with an isotropic pressure. This block-shaped formed product was fired at a temperature of 2800°C for graphitization. Then, the graphitized block-shaped formed product was pulverized, and sieved by using a sieve with 250 mesh to obtain graphite particles B having a volume-based median diameter (D50) of 23 μm.

[Production of Negative Electrode]

Mixing 50 parts by mass of the graphite particles A as first graphite particles and 50 parts by mass of the graphite particles B as second graphite particles was performed to obtain mixed graphite. This mixed graphite and SiO as a Si-containing material were mixed at a mass ratio of 92:8 to be used as a first negative electrode active material. The first negative electrode active material, carboxymethylcellulose (CMC), and styrene-butadiene copolymer rubber (SBR) were mixed at a mass ratio of 100:1:1 to prepare a first negative electrode mixture slurry. The graphite particles B as second graphite particles and SiO as a Si-containing material were mixed at a mass ratio of 92:8 to be used as a second negative electrode active material. The second negative electrode active material, carboxymethylcellulose (CMC), and styrene-butadiene copolymer rubber (SBR) were mixed at a mass ratio of 100:1:1 to prepare a second negative electrode mixture slurry.

The second negative electrode mixture slurry was applied on both surfaces of copper foil having a thickness of 8 μm, the coating film was dried, then the first negative electrode mixture slurry was applied and dried on the coating film, and the coating film was rolled with a roller to produce a negative electrode in which a negative electrode mixture layer (thickness on one side: 100 μm) was formed on both the surfaces of the negative electrode current collector. In this time, each of the negative electrode mixture slurries was applied so that a thickness ratio between a layer (an upper layer) to be formed with the first negative electrode mixture slurry and a layer (a lower layer) to be formed with the second negative electrode mixture slurry was 50:50. Specifically, the first graphite particles : the second graphite particles in a half region on the outer surface side of the negative electrode mixture layer was 50:50 in a mass ratio, and the first graphite particles : the second graphite particles in a half region on the negative electrode current collector side of the negative electrode mixture layer was 0:100 in a mass ratio. In the produced negative electrode, internal porosities of the first graphite particles (the graphite particles A) and the second graphite particles (the graphite particles B) were measured to find that the internal porosity of the first graphite particles (the first internal porosity) was 3% and the internal porosity of the second graphite particles (the second internal porosity) was 15%.

[Production of Non-Aqueous Electrolyte Liquid]

Into a mixed solvent in which ethylene carbonate (EC), ethyl methyl carbonate (EMC), and dimethyl carbonate (DMC) were mixed at a volume ratio of 20:5:75, $LiPF_6$ was dissolved at a concentration of 1.35 mol/L. Further, vinylene carbonate (VC) was added at 3 mass% relative to the total mass of the above mixed solvent and $LiPF_6$ to be used as a base non-aqueous electrolyte liquid. Then, 0.5 parts by mass of 1,3-propenesultone and 0.5 parts by mass of fluoroethylene carbonate (FEC) were each added into 100 parts by mass of the base non-aqueous electrolyte liquid to produce a non-aqueous electrolyte liquid. Thus, in the non-aqueous electrolyte liquid, the concentration (X) of the sultone compound was 0.5 mass%, the concentration (Y) of FEC was 0.5 mass%, and X/Y was 1.0.

[Production of Test Cell (Non-Aqueous Electrolyte Liquid Secondary Battery)]

Lead terminals were respectively attached to the positive electrode and the negative electrode, and the positive electrode and the negative electrode were spirally wound via a separator to produce a wound electrode assembly. This electrode assembly was housed in a bottomed cylindrical housing can, the negative electrode lead was welded to a bottom inner face of the housing can, and the positive electrode lead was welded to an internal terminal plate of a sealing assembly. Thereafter, the non-aqueous electrolyte liquid was injected into the housing can, and an opened edge portion of

the housing can was crimped to the sealing assembly to produce a test cell having a battery capacity of 3400 mAh.

[Evaluation of Capacity Retention (Charge-Discharge Cycle Characteristics)]

Under a temperature environment at 25°C, the produced test cell was charged at a constant current of 990 mA (0.3 time rate) until a battery voltage reached 4.2 V, and then charged at a constant voltage of 4.2 V with a termination current of 66 mA. Thereafter, the test cell was discharged at a constant current of 990 mA until the battery voltage reached 3.0 V. This charge and discharge was repeated with 400 cycles, and a capacity retention was calculated by the following formula.

Capacity retention [%] = (Discharge capacity at 400th cycle / Discharge capacity at 1st cycle) × 100

[Evaluation of Expansion Volume]

The test cell after the above cycle test was taken out of a thermostat container, a height at the can bottom center portion in the height direction of the battery based on the can bottom outer peripheral portion of the housing can was measured by using a laser-type displacement meter, and this height was regarded as a height at the can bottom center portion after storage. Then, a height at the can bottom center portion before storage was subtracted from the measured height at the can bottom center portion after storage to determine an expansion volume of the battery.

<Example 2>

[Production of Graphite Particles C]

Cokes was pulverized until the volume-based median diameter (D50) was 15 μm. Into the pulverized cokes, pitch was added as a binder to aggregate the cokes, and then a block-shaped formed product having a density of greater than or equal to 1.6 g/cm$^3$ and less than or equal to 1.9 g/cm$^3$ was obtained with an isotropic pressure. This block-shaped formed product was fired at a temperature of 2800°C for graphitization. Then, the graphitized block-shaped formed product was pulverized, and sieved by using a sieve with 250 mesh to obtain graphite particles C having a volume-based median diameter (D50) of 23 μm.

A test cell was produced and evaluated in the same manner as in Example 1 except that, in the production of the negative electrode, the graphite particles B were used as the first graphite particles and the graphite particles C were used as the second graphite particles. In more detail, mixed graphite obtained by mixing 50 parts by mass of the graphite particles B as the first graphite particles and 50 parts by mass of the graphite particles B as the second graphite particles, and SiO as a Si-containing material were mixed at a mass ratio of 92:8 to be used as the first negative electrode active material. The graphite particles C as the second graphite particles and SiO as a Si-containing material were mixed at a mass ratio of 92:8 to be used as the second negative electrode active material. In the produced negative electrode, internal porosities of the first graphite particles (the graphite particles B) and the second graphite particles (the graphite particles C) were measured to find that the internal porosity of the first graphite particles (the first internal porosity) was 15% and the internal porosity of the second graphite particles (the second internal porosity) was 25%.

<Example 3>

A test cell was produced and evaluated in the same manner as in Example 1 except that, in the production of the non-aqueous electrolyte liquid, 5.0 parts by mass of 1,3-propenesultone and 0.5 parts by mass of FEC were each added into 100 parts by mass of the base non-aqueous electrolyte liquid to produce the non-aqueous electrolyte liquid. Specifically, in the non-aqueous electrolyte liquid, the concentration (X) of the sultone compound was 5.0 mass%, the concentration (Y) of FEC was 0.5 mass%, and X/Y was 10.0.

<Comparative Example 1>

A test cell was produced and evaluated in the same manner as in Example 1 except that, in the production of the non-aqueous electrolyte liquid, 1,3-propenesultone was not added into the non-aqueous electrolyte liquid. Specifically, in the non-aqueous electrolyte liquid, the concentration (X) of the sultone compound was 0 mass%, the concentration (Y) of FEC was 0.5 mass%, and X/Y was 0.

<Comparative Example 2>

A test cell was produced and evaluated in the same manner as in Example 1 except that, in the production of the negative electrode, the first negative electrode mixture slurry was applied on both surfaces of copper foil having a thickness of 8 μm, the coating film was dried, then the second negative electrode mixture slurry was applied and dried, and the coating film was rolled with a roller to produce a negative electrode in which a negative electrode mixture layer was formed on both the surfaces of the negative electrode current collector. In this time, each of the negative electrode mixture slurries was applied so that a thickness ratio between a layer (a lower layer) to be formed with the first negative electrode mixture slurry and a layer (an upper layer) to be formed with the second negative electrode mixture slurry was 50:50. Specifically, the first graphite particles : the second graphite particles in a half region on the outer surface side of the negative electrode mixture layer was 0:100 in a mass ratio, and the first graphite particles : the second graphite particles in a half region on the negative electrode current collector side of the negative electrode mixture layer was 50:50 in a mass ratio.

<Comparative Example 3>

A test cell was produced and evaluated in the same manner as in Example 2 except that, in the production of the non-aqueous electrolyte liquid, 1,3-propenesultone was not added into the non-aqueous electrolyte liquid. Specifically, in the non-aqueous electrolyte liquid, the concentration (X) of the sultone compound was 0 mass%, the concentration (Y) of FEC was 0.5 mass%, and X/Y was 0.

<Comparative Example 4>

A test cell was produced and evaluated in the same manner as in Example 1 except that: in the production of the negative electrode, the mixing ratio of the graphite particles in the first negative electrode active material and the second negative electrode active material was changed; and in the production of the non-aqueous electrolyte liquid, 1,3-propenesultone was not added into the non-aqueous electrolyte liquid. In more detail, mixed graphite obtained by mixing 25 parts by mass of the graphite particles A as the first graphite particles and 75 parts by mass of the graphite particles B as the second graphite particles, and SiO as a Si-containing material were mixed at a mass ratio of 92:8 to be used as the first negative electrode active material and the second negative electrode active material. Specifically, the first graphite particles : the second graphite particles in a half region on the outer surface side of the negative electrode mixture layer was 25:75 in a mass ratio, and the first graphite particles : the second graphite particles in a half region on the negative electrode current collector side of the negative electrode mixture layer was also 25:75 in a mass ratio. In the non-aqueous electrolyte liquid, the concentration (X) of the sultone compound was 0 mass%, the concentration (Y) of FEC was 0.5 mass%, and X/Y was 0.

<Comparative Example 5>

A test cell was produced and evaluated in the same manner as in Example 1 except that, in the production of the negative electrode, the mixing ratio of the graphite particles in the first negative electrode active material and the second negative electrode active material was changed. In more detail, mixed graphite obtained by mixing 25 parts by mass of the graphite particles A as the first graphite particles and 75 parts by mass of the graphite particles B as the second graphite particles, and SiO as a Si-containing material were mixed at a mass ratio of 92:8 to be used as the first negative electrode active material and the second negative electrode active material. Specifically, the first graphite particles : the second graphite particles in a half region on the outer surface side of the negative electrode mixture layer was 25:75 in a mass ratio, and the first graphite particles : the second graphite particles in a half region on the negative electrode current collector side of the negative electrode mixture layer was also 25:75 in a mass ratio.

<Comparative Example 6>

A test cell was produced and evaluated in the same manner as in Example 1 except that, in the production of the non-aqueous electrolyte liquid, 0.5 parts by mass of 1,3-propenesultone and 2.0 parts by mass of FEC were added into the non-aqueous electrolyte liquid. Specifically, in the non-aqueous electrolyte liquid, the concentration X of the sultone compound was 0.5 mass%, the concentration Y of FEC was 2.0 mass%, and X/Y was 0.25.

Table 1 shows the capacity retention and evaluation results of the expansion volume of the test cells of Examples and Comparative Examples.

[Table 1]

| | Negative electrode | | | | Non-aqueous electrolyte liquid | | | Evaluation result | |
|---|---|---|---|---|---|---|---|---|---|
| | Internal porosity of graphite particles | | First graphite particles : Second graphite particles (mass ratio) | | Concentration (X) of sultone Compound [mass%] | Concentration (Y) of FEC [mass%] | X/Y | Capacity Retention [%] | Expansion Volume [mm] |
| | Fi'st internal porosity [%] | Second internal porosity [%] | First region | Second region | | | | | |
| Example 1 | 3 | 15 | 50:50 | 0:100 | 0.5 | 0.5 | 1.0 | 95 | 0.021 |
| Example 2 | 15 | 25 | 50:50 | 0:100 | 0.5 | 0.5 | 1.0 | 91 | 0.026 |
| Example 3 | 3 | 15 | 50:50 | 0:100 | 5.0 | 0.5 | 10 | 92 | 0.030 |
| Comparative Example 1 | 3 | 15 | 50:50 | 0:100 | 0 | 0.5 | 0 | 86 | 0.045 |
| Comparative Example 2 | 3 | 15 | 0:100 | 50:50 | 0.5 | 0.5 | 1.0 | 87 | 0.043 |
| Comparative Example 3 | 15 | 25 | 50:50 | 0:100 | 0 | 0.5 | 0 | 83 | 0.061 |
| Comparative Example 4 | 3 | 15 | 25:75 | 25:75 | 0 | 0.5 | 0 | 84 | 0.065 |
| Comparative Example 5 | 3 | 15 | 25:75 | 25:75 | 0.5 | 0.5 | 1.0 | 88 | 0.040 |
| Comparative Example 6 | 3 | 15 | 50:50 | 0:100 | 0.5 | 2.0 | 0.25 | 92 | 0.065 |

As shown in Table 1, the test cells of Examples 1 to 3 improved the capacity retention compared with the test cells of Comparative Examples 1 to 5. This is presumably because setting the content of the first graphite particles with the small internal porosity to be higher on the surface side of the negative electrode mixture layer 42 and setting the concentrations of the sultone compound and FEC in the non-aqueous electrolyte liquid to be within the predetermined ranges form the good composite coating on the surface of the negative electrode active material to retain the coating even with repeated charge and discharge.

Meanwhile, the test cell of Comparative Example 6 in which FEC was excessively present relative to the sultone compound improved the capacity retention but increased the expansion volume. This is presumably because the remaining FEC was decomposed with repeated charge and discharge to excessively generate gas. Therefore, it can be said that the value of X/Y needs to be greater than 0.5 in order to reduce the expansion volume of the battery while improving the charge-discharge cycle characteristics.

The present disclosure will be further described by the following embodiments.

Constituent 1: A non-aqueous electrolyte liquid secondary battery, comprising: a positive electrode; a negative electrode; and a non-aqueous electrolyte liquid, wherein the negative electrode has a negative electrode current collector and a negative electrode mixture layer disposed on a surface of the negative electrode current collector, the negative electrode mixture layer includes a first negative electrode active material with a first internal porosity and a second negative electrode active material with a second internal porosity, the first internal porosity is smaller than the second internal porosity, when the negative electrode mixture layer is bisected in a thickness direction, a region on a surface side of the negative electrode mixture layer is defined as a first region, and a region of the negative electrode mixture layer on a side of the negative electrode current collector is defined as a second region, a content of the first negative electrode active material in the first region is higher than in the second region, the non-aqueous electrolyte liquid includes at least a sultone compound represented by Formula (I) and fluoroethylene carbonate, and in the non-aqueous electrolyte liquid, when a concentration of the sultone compound is defined as X mass% and a concentration of the fluoroethylene carbonate is defined as Y mass%, X and Y satisfy $0.01 \leq X \leq 5.0$, $0.01 \leq Y \leq 2.0$, and $X/Y > 0.5$,

[Formula 3]

(I)

wherein R1 to R4 each independently represent a hydrogen atom or a substituent, and the substituent includes a halogen atom, a hydrocarbon group, a hydroxy group, an amino group, or an ester group.

Constitution 2: The non-aqueous electrolyte liquid secondary battery according to Constitution 1, wherein the first negative electrode active material and the second negative electrode active material are graphite particles.

Constitution 3: The non-aqueous electrolyte liquid secondary battery according to Constitution 1 or 2, wherein the first internal porosity is less than or equal to 5%, and the second internal porosity is greater than or equal to 8% and less than or equal to 20%.

Constitution 4: The non-aqueous electrolyte liquid secondary battery according to any one of Constitutions 1 to 3, wherein the content of the first negative electrode active material in the first region is greater than or equal to 20 mass% and less than or equal to 70 mass% relative to a total mass of the negative electrode active material in the first region.

Constitution 5: The non-aqueous electrolyte liquid secondary battery according to any one of Constitutions 1 to 4, wherein the content of the second negative electrode active material in the second region is greater than or equal to 50 mass% and less than or equal to 100 mass% relative to a total mass of the negative electrode active material in the second region.

Constitution 6: The non-aqueous electrolyte liquid secondary battery according to any one of Constitutions 1 to 5, wherein the sultone compound is 1,3-propenesultone.

Constitution 7: The non-aqueous electrolyte liquid secondary battery according to any one of Constitutions 1 to 6, wherein the non-aqueous electrolyte liquid further includes vinylene carbonate, and when a concentration of the vinylene carbonate is defined as Z mass%, Z satisfies $0.5 \leq Z \leq 5.0$.

Constitution 8: The non-aqueous electrolyte liquid secondary battery according to any one of Constitutions 1 to 7, wherein the negative electrode mixture layer includes a Si-containing material as a negative electrode active material.

REFERENCE SIGNS LIST

10 Non-aqueous electrolyte liquid secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 positive electrode current collector, 32 positive electrode mixture layer, 40 negative electrode current collector, 42 negative electrode mixture layer, 44 first region, 46 second region, 50 graphite particle, 52 internal gap (gap), 54 external gap (gap)

## Claims

1. A non-aqueous electrolyte liquid secondary battery, comprising:

   a positive electrode;
   a negative electrode; and
   a non-aqueous electrolyte liquid, wherein
   the negative electrode has a negative electrode current collector and a negative electrode mixture layer disposed on a surface of the negative electrode current collector,
   the negative electrode mixture layer includes a first negative electrode active material with a first internal porosity and a second negative electrode active material with a second internal porosity,
   the first internal porosity is smaller than the second internal porosity,
   when the negative electrode mixture layer is bisected in a thickness direction, a region on a surface side of the negative electrode mixture layer is defined as a first region, and a region of the negative electrode mixture layer on a side of the negative electrode current collector is defined as a second region, the first negative electrode active material is contained more in the first region than in the second region,
   the non-aqueous electrolyte liquid includes at least a sultone compound represented by Formula (I) and fluoroethylene carbonate, and
   in the non-aqueous electrolyte liquid, when a concentration of the sultone compound is defined as X mass% and a concentration of the fluoroethylene carbonate is defined as Y mass%, X and Y satisfy $0.01 \leq X \leq 5.0$, $0.01 \leq Y \leq 2.0$, and $X/Y > 0.5$,

   [Formula 1]

   (I)

   wherein R1 to R4 each independently represent a hydrogen atom or a substituent, and the substituent includes a halogen atom, a hydrocarbon group, a hydroxy group, an amino group, or an ester group.

2. The non-aqueous electrolyte liquid secondary battery according to claim 1, wherein the first negative electrode active material and the second negative electrode active material are graphite particles.

3. The non-aqueous electrolyte liquid secondary battery according to claim 1, wherein the first internal porosity is less than or equal to 5%, and the second internal porosity is greater than or equal to 8% and less than or equal to 20%.

4. The non-aqueous electrolyte liquid secondary battery according to claim 1, wherein the content of the first negative electrode active material in the first region is greater than or equal to 20 mass% and less than or equal to 70 mass% relative to a total mass of the negative electrode active material in the first region.

5. The non-aqueous electrolyte liquid secondary battery according to claim 1, wherein a content of the second negative electrode active material in the second region is greater than or equal to 50 mass% and less than or equal to 100

mass% relative to a total mass of the negative electrode active material in the second region.

6. The non-aqueous electrolyte liquid secondary battery according to claim 1, wherein the sultone compound is 1,3-propenesultone.

7. The non-aqueous electrolyte liquid secondary battery according to claim 1, wherein the non-aqueous electrolyte liquid further includes vinylene carbonate, and
when a concentration of the vinylene carbonate is defined as Z mass%, Z satisfies $0.5 \leq Z \leq 5.0$.

8. The non-aqueous electrolyte liquid secondary battery according to claim 1, wherein the negative electrode mixture layer includes a Si-containing material as a negative electrode active material.

Figure 1

10
17
26
23
27
24
25
16
28
20
22
18
12
11
42 40 42
32 30 32
11
12
13
14
13
13
21
19

Figure 2

12
44
42
46
40
46
42
44

Figure 3

50
52
54

# INTERNATIONAL SEARCH REPORT

International application No.
**PCT/JP2024/035246**

**A. CLASSIFICATION OF SUBJECT MATTER**

***H01M 10/052***(2010.01)i; ***H01M 4/36***(2006.01)i; ***H01M 4/38***(2006.01)i; ***H01M 4/48***(2010.01)i; ***H01M 4/133***(2010.01)i; ***H01M 4/587***(2010.01)i; ***H01M 10/0567***(2010.01)i; ***H01M 10/0569***(2010.01)i
FI: H01M10/052; H01M4/36 D; H01M4/587; H01M4/133; H01M4/48; H01M4/36 E; H01M10/0569; H01M10/0567; H01M4/38 Z

According to International Patent Classification (IPC) or to both national classification and IPC

**B. FIELDS SEARCHED**

Minimum documentation searched (classification system followed by classification symbols)

H01M10/052; H01M4/36; H01M4/38; H01M4/48; H01M4/133; H01M4/587; H01M10/0567; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/171564 A1 (PANASONIC ENERGY CO., LTD.) 14 September 2023 (2023-09-14) paragraphs [0055]-[0058], [0069], [0071] | 1-8 |
| Y | WO 2013/128676 A1 (SHIN-KOBE ELECTRIC MACHINERY CO., LTD.) 06 September 2013 (2013-09-06) paragraphs [0013], [0131], [0146]-[0155], [0193], [0200]-[0219], [0247], [0268]-[0269], [0279] | 1-8 |
| Y | WO 2021/117480 A1 (SANYO ELECTRIC CO., LTD.) 17 June 2021 (2021-06-17) paragraphs [0006], [0053]-[0054], [0061] | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035246**

| Patent document cited in search report | Publication date (day/month/year) | Patent family member(s) | Publication date (day/month/year) |
|---|---|---|---|
| WO 2023/171564 A1 | 14 September 2023 | CN 118805282 A | |
| WO 2013/128676 A1 | 06 September 2013 | US 2014/0322576 A1<br>paragraphs [0014], [0136], [0154]-[0165], [0196], table 17, paragraphs [0206]-[0218], table 9B, paragraphs [0257]-[0258], [0268]<br>JP 2014-225481 A<br>JP 2015-8160 A<br>US 2016/0006077 A1<br>WO 2013/128679 A1<br>EP 2822079 A1<br>KR 10-2013-0130027 A<br>CN 103636048 A<br>CN 105206796 A | |
| WO 2021/117480 A1 | 17 June 2021 | US 2022/0399575 A1<br>paragraphs [0007], [0075]-[0076], table 1<br>CN 114762167 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9320600 A
- JP 2014067638 A